# EUROPÄISCHE PATENTANMELDUNG

(11) **EP 2 554 433 A2**
(43) Veröffentlichungstag der Anmeldung: **06.02.2013**
(21) Anmeldenummer: 12005682.5
(22) Anmeldetag: 03.08.2012
(51) Int. Cl.: B60Q 1/26, B60Q 1/32, B60Q 1/50

(54) **Beleuchtungseinrichtung für Kraftfahrzeuge**

(30) Priorität: 04.08.2011 DE 102011109489
(71) Anmelder: Danilko, Marc, 44137 Dortmund (DE)
(72) Erfinder: Danilko, Marc, 44137 Dortmund (DE)
(74) Vertreter: Schober, Mirko

(57) **Zusammenfassung**

Ein Kraftfahrzeug weist eine an der Kraftfahrzeugaußenseite angebrachte, eine Außenfläche des Kraftfahrzeugs beleuchtende Beleuchtungseinrichtung auf. Ferner weist es eine Zündungseinrichtung zum Starten bzw. Ausschalten des Kraftfahrzeugs und eine durch die Beleuchtungseinrichtung angestrahlte oder anzustrahlende Außenfläche auf. Die Beleuchtungseinrichtung ist mit einer Energieversorgung gespeist. Es ist eine Steuereinheit vorgesehen, die so ausgelegt ist, dass sie die Unterbrechung der Energieversorgung der Beleuchtungseinrichtung bei eingeschalteter Zündungseinrichtung initiiert.

## Beschreibung

Die Erfindung betrifft ein Kraftfahrzeug mit einer eine Au-βenfläche des Kraftfahrzeugs beleuchtenden Beleuchtungseinrichtung.

Solche Beleuchtungseinrichtungen sind z.B. zur Beleuchtung von Nummernschildern bekannt. Gerade bei Nutzfahrzeugen kommt es oft vor, dass die Flächen des Fahrzeugaufbaus mit Aufschriften, etwa Werbeaufschriften oder Informationen des Nutzfahrzeuginhabers wie Branche, Telefonnummer oder andere Kontaktdaten, versehen sind.

Es ist verhältnismäßig teuer, ein Fahrzeug mit entsprechenden Aufschriften, Grafiken, Logos etc. zu bestücken, weil diese individuell angefertigt werden müssen und den Anschaffungswert des Fahrzeugs deutlich erhöhen. Während die Aufschriften tagsüber gut für jedermann les- oder erkennbar sind, ist dies bei hereinbrechender Dunkelheit nicht der Fall. Probleme bestehen also dann, wenn die Aufschriften infolge nicht mehr lesbar sind.

Dies gilt es nutzbar zu machen. Dazu ist in DE 92 12 905 U und DE 299 21 620 U1 grundsätzlich vorgeschlagen worden, eine Beleuchtungsvorrichtung außen am Fahrzeug anzubringen. Dazu ist es allerdings erforderlich, dass Straßenverkehrsvorschriften eingehalten werden, sodass nicht einfach am Fahrzeug Beleuchtungsmittel angebracht werden können, um die Aufschriften anzustrahlen.

Aufgabe der Erfindung ist es, ein Fahrzeug mit Beleuchtungseinrichtung zur Verfügung zu stellen, welches zum einen die Erkennbarkeit von Aufschriften bei Dunkelheit löst, zum anderen aber die Anforderungen an die geltenden Straßenverkehrsvorschriften einhält.

Gelöst wird diese Aufgabe durch ein Kraftfahrzeug mit den Merkmalen des Anspruchs 1. Vorteilhafte Ausführungsformen finden sich in den Unteransprüchen.

Erfindungsgemäß weist das Fahrzeug eine Steuereinrichtung auf, der verschiedene Aufgaben zukommen. Zum einen überwacht sie die Zündung, zum anderen kann Sie eine Geschwindigkeitsmesseinrichtung, z.B. ein Tachosignal, überwachen. Die Steuereinheit sorgt dann dafür, dass bei eingeschalteter Zündung und/oder Bestromung der Lichtmaschine - d.h. bei Detektion eines von der Lichtmaschine oder zur Lichtmaschine fließenden Stroms - und/ oder einer Bewegung des Fahrzeugs, die Energiezufuhr an die Beleuchtungseinrichtung unterbrochen und die Beleuchtungseinrichtung abgeschaltet wird. Der Zustand der eingeschalteten Zündung umfasst vorliegend auch den Fall, in welchem lediglich der Zündschlüssel in das Zündschloss gesteckt ist, ohne dass der Startvorgang ausgelöst wird. Gleichermaßen bedeutet eingeschaltete Zündung auch, dass der Zündschlüssel im Zündschloss gedreht oder anderweitig bewegt sein kann, ohne dass der Motor gestartet wird. Üblicherweise gibt es eine Stellung "1", bei der Zugriff auf die Autobatterie für Verbraucher freigeschaltet ist. So ist sichergestellt, dass die Beleuchtungseinrichtung straßenverkehrskonform bei eingeschaltetem oder sich bewegendem Fahrzeug ausgeschaltet bleibt. Ist die Zündung aus und die Geschwindigkeit Null, dann ist die Beleuchtungseinrichtung automatisch oder manuell einschaltbar.

Die Erfindung wird nachfolgend anhand der Figuren 1 bis 3 schematisch näher erläutert.
- Figur 1 -: zeigt eine perspektivische Teilansicht im Bereich eines Fahrzeugdaches,
- Figur 2 -: zeigt eine perspektivische Teilansicht mit der Beleuchtungseinrichtung und einem dadurch beleuchteten Fahrzeugbereich,
- Figur 3 -: zeigt ein Blockschaltbild, welches die Verschaltung von Fahrzeugkomponenten verdeutlicht,
- Figur 4 -: zeigt ein Blockschaltbild für eine erste Ausführungsform der vorliegenden Erfindung,
- Figur 5 -: zeigt ein Blockschaltbild für eine zweite Ausführungsform der vorliegenden Erfindung.

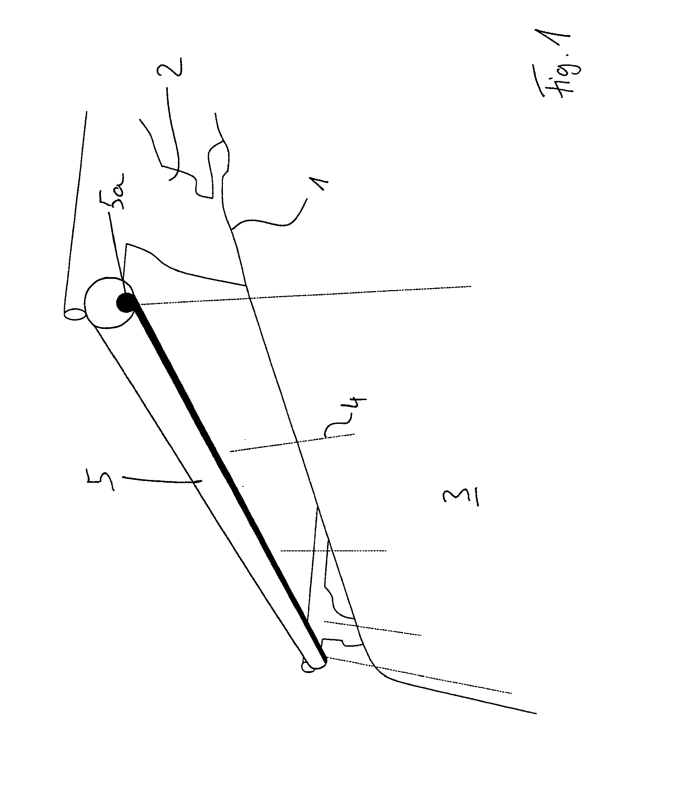

In Figur 1 ist eine Beleuchtungseinrichtung 5 an einem Dachgepäckträger oder einer Dachreling 2 am Fahrzeugdach 1 montiert und strahlt Licht 4 nach unten auf eine Seitenfläche 3 des Fahrzeugs.

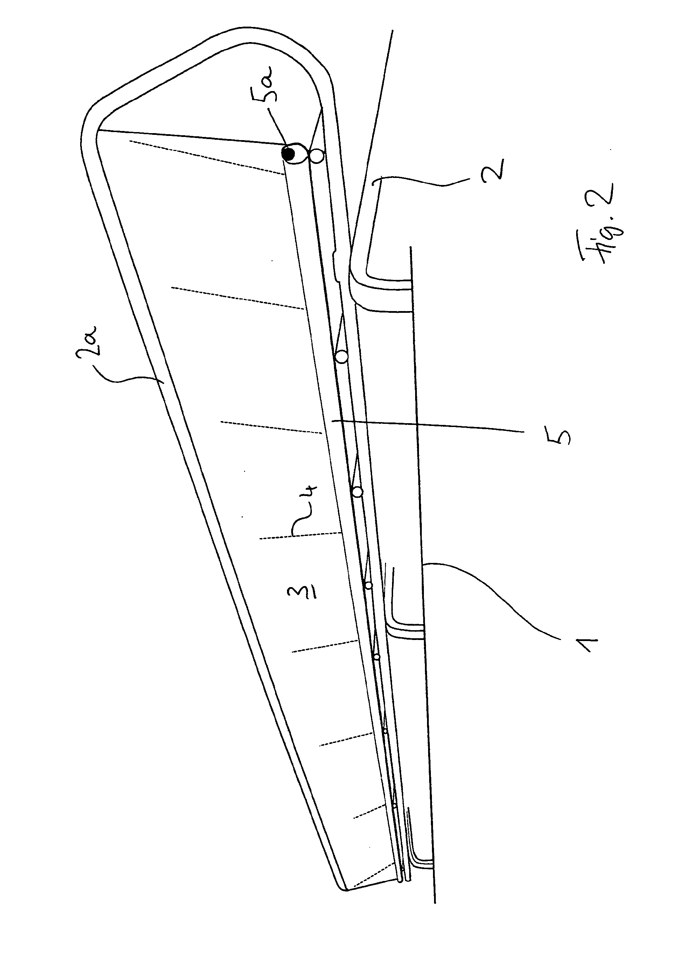

In Figur 2 ist die Beleuchtungseinrichtung 5 gezeigt, die an einem Dachträger 2 am Fahrzeugdach 1 angebracht ist. Die mit Licht 4 zu beleuchtende Fläche 3 ist hier an einer am Dachträger 2 montierten Aufhängung 2a befestigt.

Die Beleuchtungseinrichtung 5 weist in beiden Fällen Leuchtmittel 5a, bevorzugt LEDs, auf, die die Fläche 3, auf der sich Graphiken und/oder Informationen befinden, anstrahlt. Der Abstrahlwinkel ist dabei so gewählt, dass nach Möglichkeit nur die Fläche 3 beleuchtet und entsprechendes, die Verkehrsteilnehmer störendes oder behinderndes Streulicht vermieden wird.

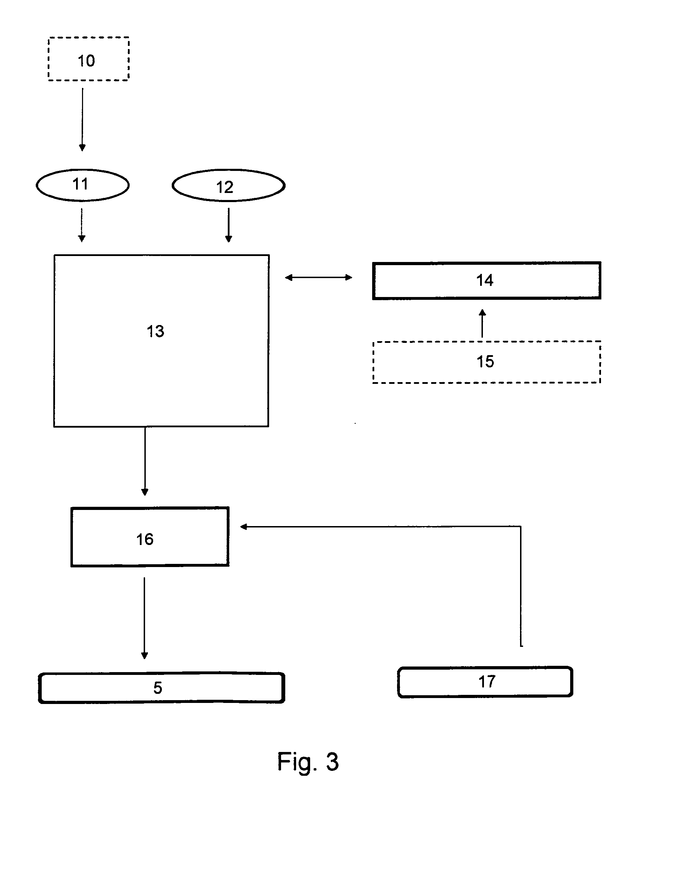

Figur 3 verdeutlicht, wie die Beleuchtungseinrichtung mit der Bordelektrik des Fahrzeugs zusammenwirkt.

Das Fahrzeug weist zunächst zur Speisung der Fahrzeugelektrik und Elektronik eine Fahrzeugbatterie 10 auf. Diese liefert insbesondere die Energie für die Zündung 11. Der Zustand der Zündung 11 und auch der Bewegungszustand des Fahrzeugs, der über eine Geschwindigkeitsmesseinrichtung 12, etwa durch Auswerten des Tachosignals, erfasst wird, werden von einer Steuereinheit 13 erfasst und verarbeitet.

Die Fahrzeugbatterie speist unter anderem auch eine separate Batterie 14 mit Ladeeinheit, welche zur Energieversorgung der Stromquelle 16 für die Beleuchtungseinrichtung 5 eingesetzt wird und sicherstellt, dass durch den Betrieb der Beleuchtung 5 die Fahrzeugbatterie 10 nicht entleert wird. Die Versorgung der Beleuchtungseinrichtung 5 kann drahtgebunden oder drahtlos, etwa über Induktion erfolgen. Optional kann die Batterie 14 anstelle oder ergänzend zur Fahrzeugbatterie 10 auch durch eine solare Einrichtung 15 geladen werden.

Zentrales Bauteil ist die Steuereinheit 13, die wie folgt arbeitet: Sie erfasst Signale über den Zustand der Zündung und/ oder der Geschwindigkeit. Ist die Zündung ausgeschaltet und bewegt sich das Fahrzeug nicht, dann wird per Signal die Stromquelle 16 freigeschaltet und die Beleuchtungseirichtung 5 kann automatisch oder manuell eingeschaltet werden. Zusätzlich kann ein Dämmerungssensor 17 vorgesehen werden, der das Einschalten der Stromquelle und damit der Beleuchtung 5 automatisch oder manuell ermöglicht, wenn es dunkel wird.

Sobald die Zündung 11 betätigt oder/und der Geschwindigkeitssensor 12 eine Fahrzeugbewegung meldet, erzeugt die Steuereinrichtung ein Ausschaltsignal, welches dafür sorgt, dass die Stromquelle 16 die Energieversorgung der Beleuchtung 5 unterbricht. Die Steuereinheit 13 fragt den Betriebszustand des Fahrzeugs bevorzugt kontinuierlich ab, sodass ein Einschalten der Beleuchtung wieder möglich wird, sobald die Zündung 11 ausgeschaltet ist und/oder das Fahrzeug sich nicht bewegt. Zudem kann die Beleuchtungsdauer über eine Zeitschaltung geregelt werden.

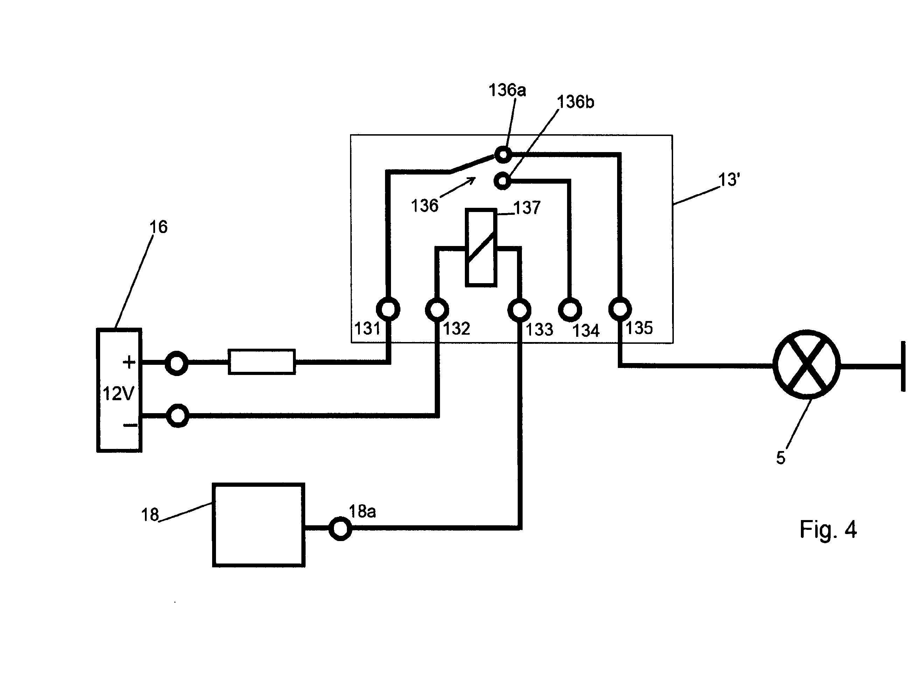

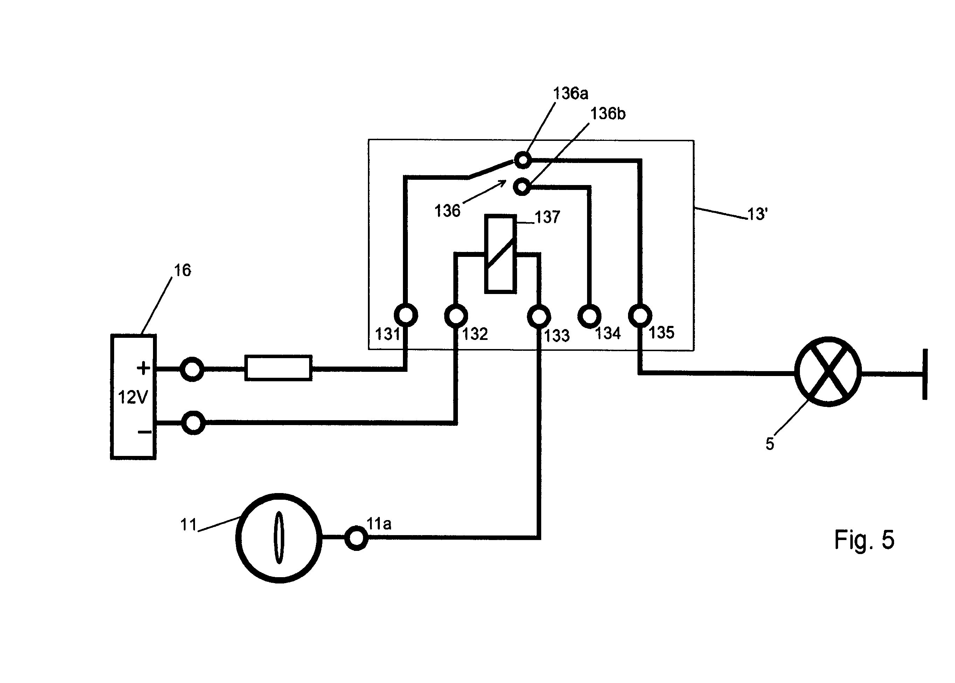

In den Figuren 4 und 5 sind genauere Darstellungen zweier Ausführungsbeispiele als Blockschaltbild abgebildet. Diese verdeutlichen den Vorgang der Unterbrechung der Energieversorgung an zwei Beispielen.

Die Steuereinheit umfasst hierzu jeweils eine Schalteinrichtung 13', die im gezeigten Beispiel als Relais mit einem Schalter 136 ausgebildet ist, der die Schaltpositionen 136a (Einschalten der Beleuchtung 5) und 136b (Ausschalten der Beleuchtung 5) einnehmen kann. Die Schalteinrichtung 13' weist eine Mehrzahl Ausgänge 131-135 auf. Der zum Schalter 136 führende erste Ausgang 131 ist mit dem Pluspol der Fahrzeugbatterie 16 verbunden. Der zweite zum Umschaltmagneten 137 führende Ausgang 132 führt zum Minuspol der Batterie 16. Der dritte Ausgang 133 führt wiederum zum Umschaltmagneten 137 des Relais und von dort ist dieser mit der Lichtmaschine 18 des Fahrzeugs verbunden. Wird die Lichtmaschine 18 bestromt, egal ob sie selbst Strom erzeugt oder ein Strom zu ihr fließt, kann dies über einen Abgriff 18a erfasst werden. In diesem Fall wird der Umschaltmagnet 137 aktiviert und der Schalter 136 wird in die Schaltposition 136b geschaltet, so dass der Stromkreis unterbrochen ist (Pluspol der Batterie 16 liegt an dem unbelegten Ausgang 134). Der Ausgang 135 ist mit dem Umschaltkontakt 136a des Schalters 136 verbunden. An diesen Ausgang ist die Beleuchtungseinrichtung 5 angeschlossen.

Die Ausführungsform in Figur 5 unterscheidet sich von der in Figur 4 lediglich dadurch, dass der Ausgang 133 nicht mit der Lichtmaschine, sondern mit dem Zündschloss 11 verbunden ist. Zwischen Zündschloss 11 und Batterie 16 gibt es eine Klemme 11a, die als "geschaltet Plus" bezeichnet wird. Wird der Zündschlüssel in das Zündschloss gesteckt und/oder darin in eine Einschaltposition bewegt, so wird bei 11a ein Potential aufgeschaltet, welches einen Stromfluss von der Batterie 16 durch den Umschaltmagneten 137 bewirkt. Dadurch wird der Schalter 136 in die Schaltposition 136b bewegt und der Stromfluss zur Beleuchtung 5 unterbrochen.

Die Erfindung stellt somit eine Fahrzeugaußenbeleuchtung zur Verfügung, die im Straßenverkehr sicher funktioniert und den gesetzlichen Bestimmungen genügt.

Überdies erhöht das erfindungsgemäß beleuchtete Fahrzeug auch die Sicherheit des Fahrzeugs selbst, insbesondere vor Vandalismus, da es auch an dunklen Orten sichtbar ist. Durch das von der Beleuchtung auf den Boden auftreffende Licht wird die unmittelbare Bodenbeschaffenheit in der Fahrzeugumgebung auch an nur gering oder aber gar nicht beleuchteten Gehwegen für Verkehrsteilnehmer wie Fußgänger und Fahrradfahrer erkennbar. Hierdurch können Gefahrenstellen schneller erkannt und Unfälle vermieden werden. Zudem führt die durch ein beleuchtetes Fahrzeug erzeugte Steigerung der Sichtbarkeit im Dunkeln auch zu einer Erhöhung der Umgebungssicherheit von den genannten Verkehrsteilnehmern.

## Patentansprüche

1. Kraftfahrzeug mit einer an der Kraftfahrzeugaußenseite angebrachten, eine Außenfläche des Kraftfahrzeugs beleuchtende Beleuchtungseinrichtung (5), einer Zündungseinrichtung (11) zum Starten oder Ausschalten des Kraftfahrzeugs, einer Lichtmaschine (18) und einer durch die Beleuchtungseinrichtung (5) angestrahlten oder anzustrahlenden Außenfläche (3), wobei die Beleuchtungseinrichtung (5) mit einer Energieversorgung (14, 15, 16) gespeist ist, wobei eine Steuereinheit (13) vorgesehen ist, wobei die Steuereinheit (13) so ausgelegt ist, dass sie die Unterbrechung der Energieversorgung der Beleuchtungseinrichtung (5) bei Bestromung der Lichtmaschine (18) und/oder eingeschalteter Zündungseinrichtung (11) initiiert.

2. Kraftfahrzeug nach Anspruch 1,
**dadurch gekennzeichnet,**
**dass** eine Geschwindigkeitsmessvorrichtung (12) vorgesehen ist, welche ein Messsignal, das angibt, ob sich das Kraftfahrzeug bewegt, an die Steuereinrichtung (13) ausgibt, wobei die Steuereinrichtung (13) weiter so ausgelegt ist, dass sie die Unterbrechung der Energieversorgung der Beleuchtungseinrichtung (5) initiiert, sobald das von der Geschwindigkeitsmessvorrichtung an die Steuereinrichtung (13) übermittelte Messsignal eine Bewegung des Kraftfahr-zeugs signalisiert.

3. Kraftfahrzeug nach Anspruch 1 oder 2,
**dadurch gekennzeichnet,**
**dass** die Steuereinheit (13) weiter so ausgelegt ist, dass sie die Einschaltbarkeit der Beleuchtungseinrichtung (5) ermöglicht, wenn die Zündungseinrichtung (11) ausgeschaltet ist und/oder das Fahrzeug still steht.

4. Kraftfahrzeug nach einem der vorherigen Ansprüche,
**dadurch gekennzeichnet,**
**dass** die Beleuchtungseinrichtung (5) wenigstens ein LED aufweist.

5. Kraftfahrzeug nach einem der vorigen Ansprüche,
**dadurch gekennzeichnet,**
**dass** die Beleuchtungseinrichtung (5) dimmbar ausgeführt ist.

6. Kraftfahrzeug nach einem der vorigen Ansprüche,
**dadurch gekennzeichnet,**
**dass** ein Dämmerungssensor (17) vorgesehen ist.

7. Kraftfahrzeug nach einem der vorigen Ansprüche,
**dadurch gekennzeichnet,**
**dass** die Energieversorgung eine solar betriebene Spannungsversorgung (15) aufweist.

8. Kraftfahrzeug nach einem der vorigen Ansprüche,
**dadurch gekennzeichnet,**
**dass** eine Ladeeinheit (14) mit Batterie vorgesehen ist,
welche von der Fahrzeugbatterie (10) gespeist wird und zur Energieversorgung für die Beleuchtungseinrichtung (5) vorgesehen ist.

9. Kraftfahrzeug nach einem der vorigen Ansprüche,
**dadurch gekennzeichnet,**
**dass** es eine Lichtmaschine aufweist und die Steuereinheit eine Schalteinrichtung umfasst, welche mit der Energieversorgung (14, 15, 16), der Lichtmaschine und der Beleuchtungseinrichtung (5) gekoppelt ist, wobei die Steuereinrichtung so ausgelegt ist, dass sie einen zur Lichtmaschine hin oder von der Lichtmaschine weg fließenden Lichtmaschinenstrom detektieren kann, und die Schalteinrichtung so geschaltet ist, dass diese die Beleuchtungseinrichtung (5) ausschaltet, wenn ein Lichtmaschinenstrom detektiert wird.

10. Kraftfahrzeug nach einem der vorigen Ansprüche,
**dadurch gekennzeichnet,**
**dass** es ein Zündschloss aufweist und die Steuereinheit eine Schalteinrichtung umfasst, welche mit der Energieversorgung (14, 15, 16), dem Zündschloss und der Beleuchtungseinrichtung (5) gekoppelt ist, wobei die Steuereinrichtung so ausgelegt ist, dass sie ein durch die Anwesenheit und/oder das Ändern der Position des Zündschlüssels im Zündschloss generiertes Zündsignal detektieren kann, und die Schalteinrichtung so geschaltet ist, dass diese die Beleuchtungseinrichtung (5) ausschaltet, wenn ein Zündsignal detektiert wird.
